# EUROPEAN PATENT APPLICATION

(11) **EP 4 016 703 A1**
(43) Date of publication of application: **22.06.2022**
(21) Application number: 21788637.3
(22) Date of filing: 09.02.2021
(51) Int. Cl.: H01M 10/6551, H01M 10/6556, H01M 10/613, H01M 50/20

(54) **BATTERY MODULE AND BATTERY PACK INCLUDING SAME**

(30) Priority: 14.04.2020 KR 20200044965
(71) Applicant: LG ENERGY SOLUTION, LTD., Seoul 07335 (KR)
(72) Inventor: JEON, Jongpil, Daejeon 34122 (KR); SEONG, Junyeob, Daejeon 34122 (KR); PARK, Myungki, Daejeon 34122 (KR); CHOI, Jonghwa, Daejeon 34122 (KR)
(74) Representative: Plasseraud IP
(86) International application number: PCT/KR2021/001728
(87) International publication number: WO 2021/210771

(57) **Abstract**

The present disclosure relates to a battery module and a battery pack including the same. A battery module according to an embodiment of the present disclosure includes: a battery cell stack in which a plurality of battery cells are stacked, a module frame for housing the battery cell stack, a heat sink formed on a bottom portion of the module frame, and a cooling port for supplying a refrigerant to the heat sink, wherein the module frame includes a module frame protrusion portion formed by partially protruding the bottom portion of the module frame, the module frame protrusion portion includes a first module frame protrusion portion and a second module frame protrusion portion that are located to be spaced apart from each other on one side of the module frame, and the cooling port includes a refrigerant injection port and a refrigerant discharge port, and each of the refrigerant injection port and the refrigerant discharge port is disposed on the first module frame protrusion portion and the second module frame protrusion portion.

## Description

### [TECHNICAL FIELD]

### Cross Citation with Related Application(s)

This application claims the benefit of Korean Patent Application No. 10-2020-0044965 filed on April 14, 2020 in the Korean Intellectual Property Office, the disclosure of which is incorporated herein by reference in its entirety.

The present disclosure relates to a battery module and a battery pack including the same, and more particularly, to a battery module having improved cooling performance, and a battery pack including the same.

### [BACKGROUND ART]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, there is a growing need for development of the secondary battery.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, hardly exhibiting memory effects compared to nickel-based secondary batteries and thus being freely charged and discharged, and having very low self-discharge rate and high energy density.

Such lithium secondary battery mainly uses a lithium-based oxide and a carbonaceous material as a positive electrode active material and a negative electrode active material, respectively. The lithium secondary battery includes an electrode assembly in which a positive electrode plate and a negative electrode plate respectively coated with the positive electrode active material and the negative electrode active material are disposed with a separator being interposed between them, and a battery case which seals and houses the electrode assembly together with an electrolyte.

Generally, the lithium secondary battery may be classified based on the shape of the exterior material into a can type secondary battery in which the electrode assembly is built in a metal can, and a pouch-type secondary battery in which the electrode assembly is built in in a pouch of an aluminum laminate sheet.

In the case of a secondary battery used for small-sized devices, two to three battery cells are disposed, but in the case of a secondary battery used for a middle or large-sized device such as an automobile, a battery module in which a large number of battery cells are electrically connected is used. In such a battery module, a large number of battery cells are connected to each other in series or parallel to form a cell stack, thereby improving capacity and output. In addition, one or more battery modules may be mounted together with various control and protection systems such as a battery management system (BMS) and a cooling system to form a battery pack.

When a secondary battery rises higher than an appropriate temperature, the secondary battery may undergo performance deterioration, and in the worst case, may explode or catch fire. In particular, in a battery module or a battery pack equipped with a plurality of secondary batteries, that is, battery cells, the temperature may rise more quickly and drastically due to buildup of heat emitted from the plurality of battery cells in a small space. In other words, in the case of a battery module in which a plurality of battery cells are stacked and a battery pack equipped with such a battery module, high output can be obtained, but it is not easy to remove heat generated from the battery cells during charging and discharging. If the heat dissipation of the battery cell is not properly performed, the deterioration of the battery cell will be accelerated and the life will be shortened, and the possibility of explosion or ignition will increase.

Moreover, a battery module included in a battery pack for vehicle is often exposed to direct sunlight and is subjected to high-temperature conditions such as the summer season or a desert region.

Therefore, when configuring a battery module or a battery pack, it may be very important to stably and effectively ensure the cooling performance.

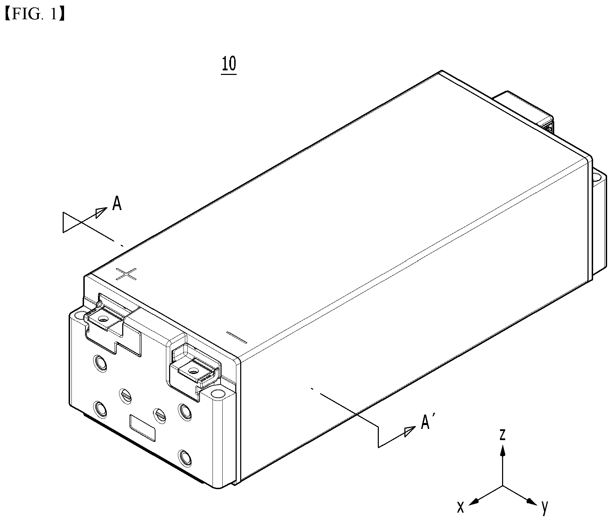

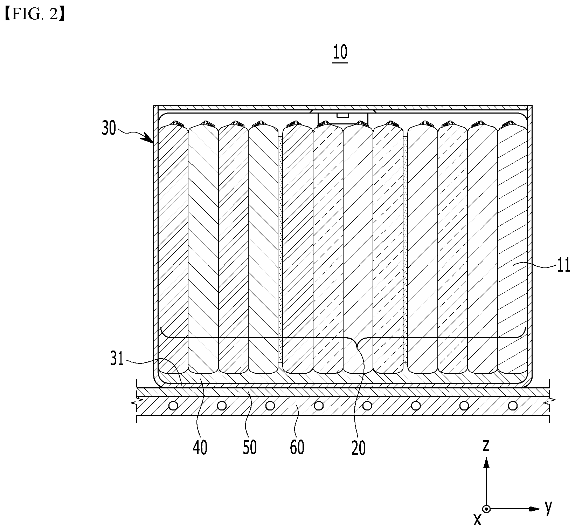

FIG. 1 is a perspective view of a conventional battery module. FIG. 2 is a cross-sectional view taken along the cutting line A-A' of FIG. 1. In particular, FIG. 2 further shows a heat transfer member and a heat sink located under the battery module.

Referring to FIGS. 1 and 2, the conventional battery module 10 is configured such that a plurality of battery cells 11 are stacked to form a battery cell stack 20, and the battery cell stack 20 is housed in the module frame 30.

As described above, since the battery module 10 includes a plurality of battery cells 11, it generates a large amount of heat in a charge and discharge process. As a cooling means, the battery module 10 may include a thermally conductive resin layer 40 that is located between the battery cell stack 20 and the bottom portion 31 of the module frame 30. In addition, when the battery module 10 is mounted on the pack frame to form a battery pack, a heat transfer member 50 and a heat sink 60 may be sequentially located under the battery module 10. The heat transfer member 50 may be a heat dissipation pad, and the heat sink 60 may have a refrigerant flow passage formed therein.

The heat generated from the battery cell 11 passes through the thermally conductive resin layer 40, the bottom portion 31 of the module frame 30, the heat transfer member 50, and the heat sink 60 in this order, and then is transmitted to the outside.

By the way, in the case of the conventional battery module 10, the heat transfer passage is complicated as described above and thus, it is difficult to effectively transfer the heat generated from the battery cell 11. The module frame 30 itself may deteriorate the heat transfer characteristics, and a fine air layer such as an air gap, that can be formed in the space between the module frame 30, the heat transfer member 50, and the heat sink 60, respectively, may also be a factor that deteriorates the heat transfer characteristics.

As for the battery module, since other demands such as miniaturization and capacity expansion are also continuing, it can be said that it is practically necessary to develop a battery module capable of satisfying these various requirements while improving cooling performance.

### [DETAILED DESCRIPTION OF THE INVENTION]

### [Technical Problem]

It is an object of the present disclosure to provide a battery module having improved cooling performance, and a battery pack including the same.

However, the technical problem to be solved by embodiments of the present disclosure is not limited to the above-described problems, and can be variously expanded within the scope of the technical idea included in the present disclosure.

### [Technical Solution]

According to one embodiment of the present disclosure, there is provided a battery module comprising: a battery cell stack in which a plurality of battery cells are stacked, a module frame for housing the battery cell stack, a heat sink formed on the bottom portion of the module frame, and a cooling port for supplying a refrigerant to the heat sink, wherein the module frame comprises a module frame protrusion portion formed by partially protruding from the bottom portion of the module frame, wherein the module frame protrusion portion comprises a first module frame protrusion portion and a second module frame protrusion portion that are located to be spaced apart from each other on one side of the module frame, and wherein the cooling port comprises a refrigerant injection port and a refrigerant discharge port, and each of the refrigerant injection port and the refrigerant discharge port is disposed on the first module frame protrusion portion and the second module frame protrusion portion.

The bottom portion of the module frame may come into contact with the refrigerant.

The heat sink may include a heat sink protrusion portion that protrudes from one side of the heat sink to a portion where the module frame protrusion portion is located.

An inlet and an outlet corresponding to each of the refrigerant injection port and the refrigerant discharge port may be formed on the heat sink protrusion portion.

The refrigerant injection port and the refrigerant discharge port may have a shape protruding upward from an upper surface of the module frame protrusion portion.

The battery module may further include end plates for covering the front and rear surfaces of the battery cell stack, wherein the module frame protrusion portion may be extended and formed so as to pass through the end plate.

A protruding pattern protruding toward the bottom portion of the module frame may be formed inside the heat sink.

According to another embodiment of the present disclosure, there is provided a battery pack comprising: a battery module which comprises a battery cell stack in which a plurality of battery cells are stacked, a module frame for housing the battery cell stack, a heat sink formed on a bottom portion of the module frame, and a cooling port for supplying a refrigerant to the heat sink and discharging the refrigerant from the heat sink, respectively; and a pack refrigerant tube having a pack refrigerant supply tube and a pack refrigerant discharge tube respectively connected to a refrigerant injection port and a refrigerant discharge port that are included in the cooling port and are spaced apart from each other, wherein the pack refrigerant tube is disposed between battery modules adjacent to each other.

All of the cooling ports formed in each of the battery modules adjacent to each other may be disposed in a space between the battery modules adjacent to each other in which the pack refrigerant tube is disposed.

The cooling port may include a refrigerant injection port and a refrigerant discharge port, and a refrigerant injection port formed in one of the battery modules adjacent to each other, and a refrigerant discharge port formed in another battery module may face each other.

The plurality of battery modules may be disposed in two rows in a direction in which the battery cells are stacked, and include a first battery module and a second battery module that face each other in a direction perpendicular to a direction in which the battery cells are stacked, and the refrigerant injection port and the refrigerant discharge port may be disposed between the first battery module and the second battery module.

The battery module may further include end plates that cover front and rear surfaces of the battery cell stack and are coupled to the module frame, and the module frame protrusion portion may be extended and formed so as to pass through the end plate, and the module frame protrusion portion may be located in a space between the battery modules adjacent to each other in which the pack refrigerant tube is disposed.

The pack refrigerant supply tube and the pack refrigerant discharge tube may be extended while intersecting with each other.

A height of the pack refrigerant supply tube and a height of the pack refrigerant discharge tube may be different from each other.

The battery pack may further include a pack refrigerant tube housing that houses the pack refrigerant tube.

### [ADVANTAGEOUS EFFECTS]

According to the embodiments of the present disclosure, the cooling performance can be improved through the battery module structure in which the module frame and the heat sink are integrated. At this time, cooling ports can be respectively formed in the battery modules in the battery pack, thereby exhibiting uniform cooling performance in each battery module.

In addition, the number of battery cell units in the battery module can be maximized and the number of battery modules in the battery pack can be minimized, thereby reducing the number of cooling ports and reducing the risk of refrigerant leakage in the battery pack.

### [BRIEF DESCRIPTION OF THE DRAWINGS]

FIG. 1 is a perspective view of a conventional battery pack.
FIG. 2 is a cross-sectional view taken along the cutting line A-A' of FIG. 1.
FIG. 3 is a perspective view showing a battery module according to an embodiment of the present disclosure.
FIG. 4 is an exploded perspective view of the battery module of FIG. 3.
FIG. 5 is a perspective view of the battery module of FIG. 3 as viewed from the bottom to the top of the battery module along the z-axis direction.
FIG. 6 is a plan view showing a battery pack according to another embodiment of the present disclosure.
FIG. 7 is a partial perspective view obtained by enlarging an area indicated by P in the battery pack of FIG. 6.
FIG. 8 is a plan view showing a refrigerant flow passage in a battery pack according to another embodiment of the present disclosure.
FIG. 9 is a view showing a housing structure of a refrigerant tube in the battery pack of FIG. 8.
FIG. 10 is a perspective view showing a battery module according to a comparative example.
FIG. 11 is a plan view showing a battery pack structure including the battery module of FIG. 10.

### [DETAILED DESCRIPTION OF THE EMBODIMENTS]

Hereinafter, various embodiments of the present disclosure will be described in detail with reference to the accompanying drawings so that those skilled in the art can easily implement them. The present disclosure may be modified in various different ways, and is not limited to the embodiments set forth herein.

Portions that are irrelevant to the description will be omitted to clearly describe the present disclosure, and like reference numerals designate like elements throughout the specification.

Further, in the figures, the size and thickness of each element are arbitrarily illustrated for convenience of description, and the present disclosure is not necessarily limited to those illustrated in the figures. In the figures, the thickness of layers, regions, etc. are exaggerated for clarity. In the figures, for convenience of description, the thicknesses of some layers and regions are shown to be exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the specification, when a portion is referred to as "including" a certain component, it means that the portion can further include other components, without excluding the other components, unless otherwise stated.

Further, throughout the specification, when referred to as "planar", it means when a target portion is viewed from the upper side, and when referred to as "cross-sectional", it means when a target portion is viewed from the side of a cross section cut vertically.

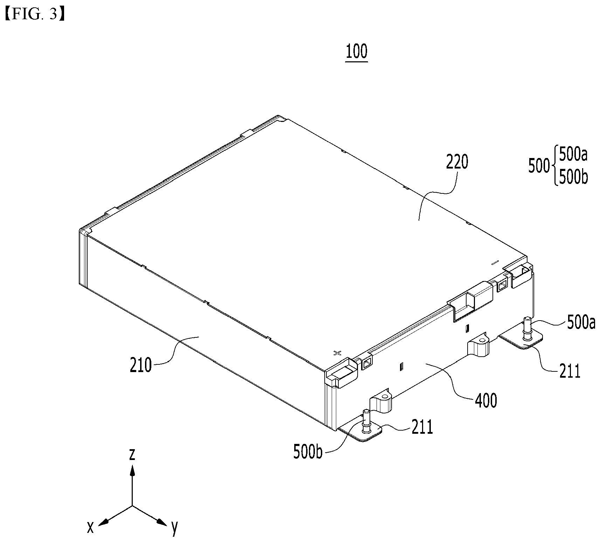

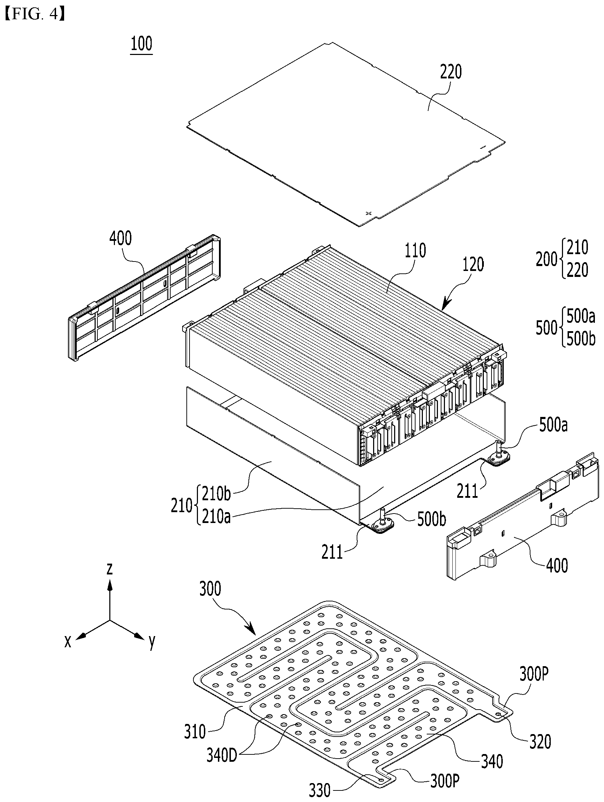

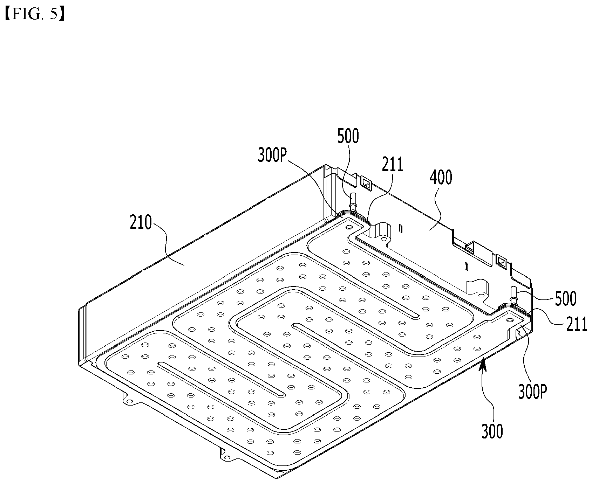

FIG. 3 is a perspective view showing a battery module according to an embodiment of the present disclosure. FIG. 4 is an exploded perspective view of the battery module of FIG. 3. FIG. 5 is a perspective view of the battery module of FIG. 3 as viewed from the bottom to the top of the battery module along the z-axis direction.

Referring to FIGS. 3 and 4, a battery pack 100 according to an embodiment of the present disclosure includes a battery cell stack 120 in which a plurality of battery cells 110 are stacked, a module frame 200 for housing the battery cell stack 120, and a heat sink 300 located under the bottom portion 210a of the module frame 200. The bottom portion 210a of the module frame 200 constitutes an upper plate of the heat sink 300, and a recessed portion 340 of the heat sink 300 and the bottom portion 210a of the module frame 200 form a refrigerant flow passage.

First, the battery cell 110 may be a pouch-type battery cell. Such a pouch-type battery cell may be formed by housing an electrode assembly in a pouch case of a laminate sheet including a resin layer and a metal layer, and then thermally fusing the sealing portion of the pouch case. At this time, the battery cell 110 may be formed in a rectangular sheet-like structure.

The battery cells 110 may be composed of a plurality of cells, and the plurality of battery cells 110 are stacked so as to be electrically connected to each other, thereby forming a battery cell stack 120. In particular, as shown in FIG. 4, a plurality of battery cells 110 may be stacked along the direction parallel to the x-axis.

The module frame 200 for housing the battery cell stack 120 may include an upper cover 220 and a U-shaped frame 210.

The U-shaped frame 210 may include a bottom portion 210a and two side surface portions 210b extending upward from both end parts of the bottom portion 210a. The bottom portion 210a may cover the lower surface of the battery cell stack 120, and the side surface portions 210b may cover both side surfaces of the battery cell stack 120.

The upper cover 220 may be formed in a single plate-shaped structure that wraps the lower surface wrapped by the U-shaped frame 210 and the remaining upper surface (z-axis direction) excluding the both side surfaces. The upper cover 220 and the U-shaped frame 210 can be joined by welding or the like in a state in which the corresponding corner portions are in contact with each other, thereby forming a structure that covers the battery cell stack 120 vertically and horizontally. The battery cell stack 120 may be physically protected through the upper cover 220 and the U-shaped frame 210. For this purpose, the upper cover 220 and the U-shaped frame 210 may include a metal material having a predetermined strength.

Meanwhile, although not specifically shown, the module frame 200 according to a modified embodiment may be a mono frame in the form of a metal plate in which the upper surface, the lower surface, and both sides are integrated. That is, this is not a structure in which the U-shaped frame 210 and the upper cover 220 are coupled with each other, but a structure in which the upper surface, the lower surface, and both sides are integrated by being manufactured by extrusion molding.

The end plate 400 may be located on both open sides (y-axis direction) corresponding to each other of the module frame 200, so that it may be formed so as to cover the battery cell stack 120. The end plate 400 may physically protect the battery cell stack 120 and other electronic instruments from external impact.

Meanwhile, although not specifically shown, a busbar frame on which a busbar is mounted and an insulating cover for electrical insulation may be located between the battery cell stack 120 and the end plate 400.

The module frame 200 according to the embodiment of the disclosure includes a module frame protrusion portion 211 formed so that the bottom portion 210a of the module frame 200 is extended and passes through the end plate 400. At this time, the refrigerant inflowing and discharging by the cooling port 500 connected to the upper surface of the module frame protrusion portion 211 may be supplied to the heat sink 300 via the module frame protrusion portion 211 and discharged from the heat sink 300. The cooling port 500 according to the embodiment of the disclosure includes a refrigerant injection port 500a and a refrigerant discharge port 500b, and the refrigerant injection port 500a and the refrigerant discharge port 500b may be respectively connected to a pack refrigerant supply tube and a pack refrigerant discharge tube described later. The module frame protrusion portion 211 includes a first module frame protrusion portion and a second module frame protrusion portion from one side of the module frame 200, the refrigerant injection port 500a is disposed on the first module frame protrusion portion, and the refrigerant discharge port 500b may be disposed on the second module frame protrusion portion.

A protruding pattern 340D may be formed in the lower plate 310 of the heat sink 300 according to the embodiment of the disclosure. In the case of a large-area battery module in which the number of stacked battery cells is increased significantly compared to a conventional case, as in the battery cell stack 120 according to the present embodiment, the width of the refrigerant flow passage may be formed wider and thus, the temperature deviation may be more severe. In the large-area battery module, it may include a case in which about 32 to 48 battery cells are stacked in one battery module as compared with a conventional case in which about 12 to 24 battery cells are stacked in one battery module. In this case, since the protruding pattern 340D according to the embodiment of the disclosure may cause the effect of substantially reducing the width of the cooling flow passage, the pressure drop can be minimized, and at the same time, the temperature deviation between the widths of the refrigerant flow passage can be reduced. Therefore, a uniform cooling effect can be realized.

Hereinafter, the heat sink according to the embodiment of the present disclosure will be described in detail with reference to FIGS. 4 and 5.

Referring to FIGS. 4 and 5, as described above, the bottom portion 210a of the module frame 200 constitutes the upper plate of the heat sink 300, and a recessed portion 340 of the heat sink 300 and the bottom portion 210a of the module frame 200 form a flow passage for the refrigerant.

Specifically, a heat sink 300 may be formed at a lower portion of the module frame 200, and the heat sink 300 may include a lower plate 310 that forms a skeleton of the heat sink 300 and makes contact with the bottom part of the module frame 200, an inlet 320 that is formed on one side of the heat sink 300 to supply a refrigerant from the outside to the interior of the heat sink 300, an outlet 330 that is formed on one side of the heat sink 300 and allows a refrigerant flowed inside the heat sink to be discharged to the outside of the heat sink, and a recessed portion 340 that connects the inlet 320 and the outlet 330 and allows the refrigerant to flow. The inlet 320 and the outlet 330 may be formed at positions corresponding to the module frame protrusion portions 211 so as to be connected to lower surface parts of the module frame protrusion portions 211. For this purpose, the inlet 320 and the outlet 330 may be formed on the heat sink protrusion portion 300P protruding from one side of the heat sink 300 to a portion where the module frame protrusion portion 211 is located. The heat sink protrusion portion 300P and the module frame protrusion portion 211 may be directly joined to each other by a method such as welding.

The recessed portion 340 of the heat sink 300 corresponds to a portion in which the lower plate 310 is recessed and formed on the lower side. The recessed portion 340 may have a structure in which a cross section cut perpendicularly to the xz plane with respect to the direction in which the refrigerant flow passage extends is a U-shaped tube, and the bottom portion 210a may be located on the opened upper side of the U-shaped tube. While the heat sink 300 comes into contact with the bottom portion 210a, the space between the recessed portion 340 and the bottom portion 210a becomes a region through which the refrigerant flows, that is, a refrigerant flow passage. Thereby, the bottom portion 210a of the module frame 200 may come into direct contact with the refrigerant.

The method of manufacturing the recessed portion 340 of the heat sink 300 is not particularly limited, but by providing a structure formed by being recessed and formed with respect to a plate-shaped heat sink 300, a U-shaped recessed portion 340 with an opened upper side may be formed.

Meanwhile, although not shown, a thermally conductive resin layer containing a thermal resin may be located between the bottom portion 210a of the module frame 200 and the battery cell stack 120 in FIG. 4. The thermally conductive resin layer may be formed by applying a thermal resin to the bottom portion 210a, and curing the applied thermally conductive resin.

The thermally conductive resin may include a thermally conductive adhesive material, and specifically, may include at least one of a silicone material, an urethan material, and an acrylic material. The thermally conductive resin is a liquid during application but is cured after application, so that it can perform the role of fixing one or more battery cells 110 constituting the battery cell stack 120. Further, since the thermally conductive resin has excellent heat transfer properties, heat generated from the battery cell 110 can be quickly transferred to the lower side of the battery module.

In the conventional battery module 10 shown in FIG. 2, the heat generated from battery cells 11 passes through a thermally conductive resin layer 40, a bottom portion 31 of the module frame 30, a heat transfer member 50, and a refrigerant of a heat sink 60 in this order, and then is transferred to the outside of the battery module 10. In addition, the flow passage of the refrigerant of the heat sink 60 is located inside the heat sink 60.

On the other hand, the battery module 100 according to the embodiment of the disclosure can realize an integrated type cooling structure of the module frame 200 and the heat sink 300 to further improve cooling performance. The bottom portion 210a of the module frame 200 can perform the role of corresponding to the upper plate of the heat sink 300, thereby realizing the integrated type cooling structure. The cooling efficiency due to direct cooling can be increased, and through a structure in which the heat sink 300 is integrated with the bottom portion 210a of the module frame 200, the space utilization rate on the battery module and the battery pack equipped with the battery module can be further improved.

Specifically, the heat generated from the battery cell 110 can pass through a thermally conductive resin layer (not shown) located between the battery cell stack 120 and the bottom portion 210a, the bottom portion 210a of the module frame 200, and the refrigerant, and then can be transferred to the outside of the battery module 100. By removing the unnecessary cooling structure according to the conventional one, the heat transfer passage can be simplified and an air gap between respective layers can be reduced, so that the cooling efficiency or performance can be enhanced. In particular, since the bottom portion 210a is configured as an upper plate of the heat sink 300, and the bottom portion 210a comes into contact with the refrigerant, there is an advantage that more direct cooling through the refrigerant can be performed. This can be distinguished from a conventional structure in which as shown in FIG. 2, the upper configuration of the heat transfer member 50 and the heat sink 60 are located between the bottom part 31 and the refrigerant, which causes a reduction in the cooling efficiency.

Further, the height of the battery module 100 is reduced through the removal of the unnecessary cooling structure, so that cost can be reduced and space utilization rate can be increased. Furthermore, since the battery module 100 can be disposed in a compact manner, the capacity or output of the battery pack including a plurality of battery modules 100 can be increased.

Meanwhile, the bottom portion 210a of the module frame 200 can be joined by welding to a portion of the lower plate 310 in which the recessed portion 340 is not formed among the heat sink 300. Since the embodiment of the disclosure has the integrated type cooling structure of the bottom portion 210a of the module frame 200 and the heat sink 300, it can exhibit the effects of not only improving the cooling performance described above, but also supporting the load of the battery cell stack 120 housed in the module frame 200 and reinforcing the rigidity of the battery module 100. In addition, the lower plate 310 and the bottom portion 210a of the module frame 200 are sealed through welding or the like, so that the refrigerant can flow without leakage in the recessed portion 340 formed inside the lower plate 310.

For effective cooling, as shown in FIG. 5, the recessed portion 340 is preferably formed over the entire region corresponding to the bottom portion 210a of the module frame 200. For this purpose, the recessed portion 340 may be curved at least one time to connect from one side to another side. In particular, the recessed portion 340 is preferably curved several times so that the recessed portion 340 is formed over the entire region corresponding to the bottom portion 210a of the module frame 200.

Through an inlet 320 from the pack refrigerant supply tube described later, the refrigerant inflows between the bottom part 210a and the recessed part 340, and the inflowing refrigerant moves along a refrigerant flow passage, and then can be discharged to a pack refrigerant discharge tube through the outlet 330. As the refrigerant moves from the start point to the end point of the refrigerant flow passage formed over the entire region corresponding to the bottom portion 210a of the module frame 200, efficient cooling can be performed over the entire region of the battery cell stack 120.

Meanwhile, the refrigerant is a medium for cooling, and may be, but not particularly limited to, a cooling water.

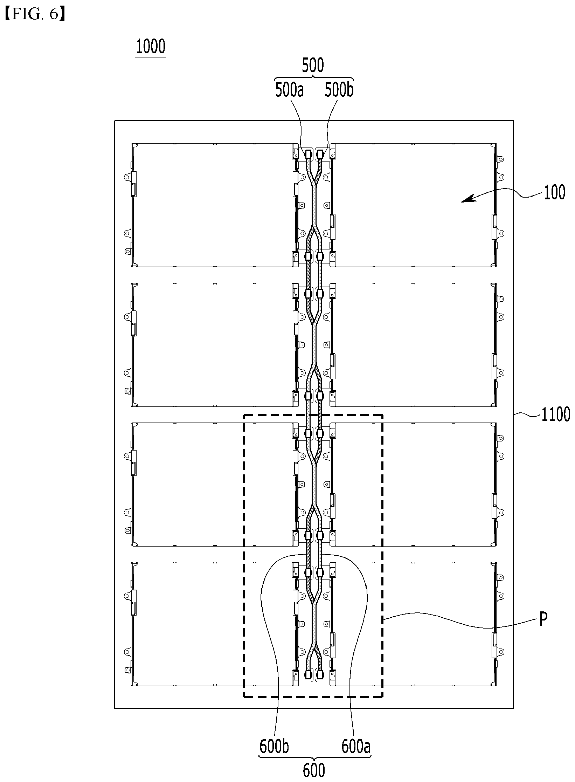

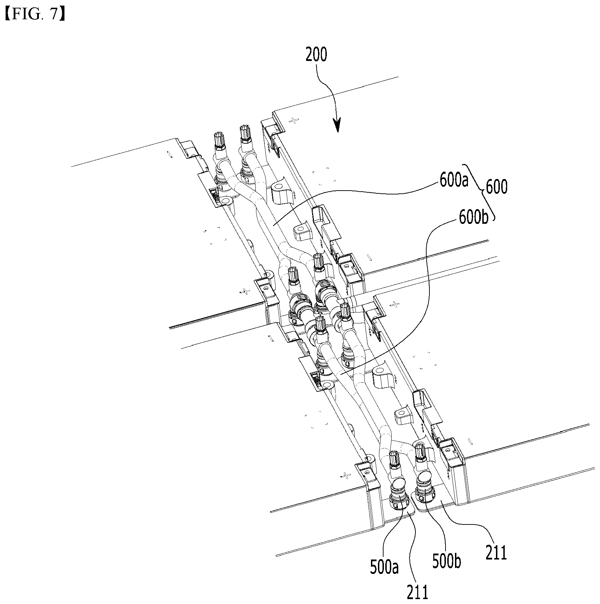

FIG. 6 is a plan view showing a battery pack according to another embodiment of the present disclosure. FIG. 7 is a partial perspective view obtained by enlarging an area indicated by P in the battery pack of FIG. 6.

Referring to FIGS. 6 and 7, the battery pack 1000 according to the embodiment of the disclosure includes: a plurality of battery modules 100 each including a battery cell stack 120 in which a plurality of battery cells 110 are stacked, a module frame 200 that houses the battery cell stack 120, a heat sink 300 that is formed on the bottom portion 210a of the module frame, and a cooling port 500 that supplies a refrigerant to the heat sink 300 and discharges the refrigerant from the heat sink 300 as shown in FIG. 4; and a pack refrigerant tube 600 having a refrigerant supply tube 600a and a pack refrigerant discharge tube 600b each connected to a refrigerant injection port 500a and a refrigerant discharge port 500b that are included in the cooling port 500 and are located to be spaced apart from each other.

Referring to FIGS. 4 and 6, a plurality of battery modules 100 included in the battery pack 1000 according to the embodiment of the disclosure includes a first battery module and a second battery module that are arranged in two rows in a direction in which the battery cells 110 are stacked, and face each other in a direction perpendicular to the direction in which the battery cells 110 are stacked. The first battery module and the second battery module may refer to the battery modules 100 that are spaced apart from each other on the left and right sides in FIG. 6. A refrigerant injection port 500a and a refrigerant discharge port 500b may be disposed between the first battery module and the second battery module.

In the embodiment of the disclosure, the pack refrigerant pipe 600 is disposed between the battery modules 100 adjacent to each other. In a space between the battery modules 100 adjacent to each other in which the pack refrigerant pipe 600 is disposed, all of the cooling ports 500 formed in each of the battery modules 100 adjacent to each other may be disposed. At this time, a refrigerant injection port 500a formed in one of the battery modules 100 adjacent to each other and a refrigerant discharge port 500b formed in another battery module 100 may be disposed while facing each other.

Referring to FIGS. 6 and 7, the pack refrigerant supply tube 600a and the pack refrigerant discharge tube 600b may be extended while intersecting with each other. By having such an arrangement structure of the pack refrigerant tube 600, an integrated type structure of the plurality of battery modules 100 and the cooling structure can be realized inside the battery pack 1000, thereby enhancing the space utilization rate while improving the cooling efficiency. The height of the pack refrigerant supply tube 600a and the height of the pack refrigerant discharge tube 600b may be different from each other, so that the pack refrigerant tube 600 can have the arrangement structure as described above. The portion where the height of the pack refrigerant supply tube 600a and the height of the pack refrigerant discharge tube 600b are different from each other can be partially formed.

The module frame protrusion portion 211 included in the battery module 100 described in FIG. 5 is extended and formed so as to pass through the end plate 400, and the module frame protrusion portion 211 may be located in a space between the battery modules 100 adjacent to each other in which the pack refrigerant tube 600 is disposed. The heat sink 300 described in FIG. 5 includes a heat sink protrusion portion 300P protruding from one side of the heat sink 300 to a portion where the module frame protrusion 211 is located, and the heat sink protrusion portion 300P and the module frame protrusion portion 211 may be coupled to each other. At this time, the heat sink protrusion portion 300P and the module frame protrusion portion 211 may be directly coupled by a method such as welding.

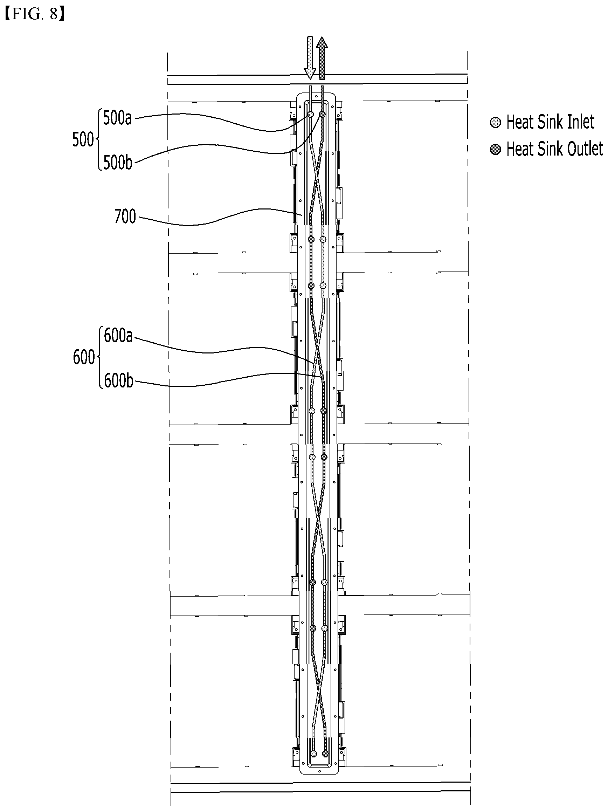

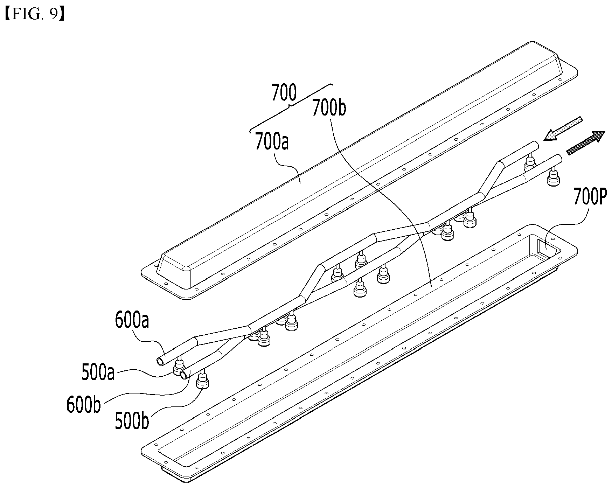

FIG. 8 is a plan view showing a refrigerant flow passage in a battery pack according to another embodiment of the present disclosure. FIG. 9 is a view showing a housing structure of a refrigerant tube in the battery pack of FIG. 8. The embodiments of FIGS. 8 and 9 have almost the same configuration as the examples described with reference to FIGS. 6 and 7, the only difference being in that the battery pack further includes a pack refrigerant tube housing.

Referring to FIGS. 6 and 8, a plurality of battery modules 100 in the battery pack 1000 may be disposed in a space surrounded by the pack frame 1100, and a refrigerant may be supplied from one side of the pack frame 1100.

Referring to FIGS. 8 and 9, the pack refrigerant tube 600 according to the embodiment of the disclosure may be housed in a pack refrigerant tube housing 700. The pack refrigerant tube housing 700 includes an upper housing 700a and a lower housing 700b, and the pack refrigerant tube 600 may be covered by the upper housing 700a in a state of being mounted on the lower housing 700b. An opening 700P through which the pack refrigerant tube 600 passes may be formed on one side of the lower housing 700b. The pack refrigerant supply tube 600a and the pack refrigerant discharge tube 600b are extended through the opening 700P, and the refrigerant is supplied to the pack refrigerant tube 600 from a refrigerant supply unit (not shown) and then supplied to the heat sink of each battery module 100 or discharged from the heat sink.

One of the plurality of battery modules included in the battery pack according to the exemplary embodiments described above includes about 32 to 48 battery cells, and 10 or less of battery modules may be included in one battery pack. In this way, the battery pack according to the embodiment of the disclosure includes a large-area battery module.

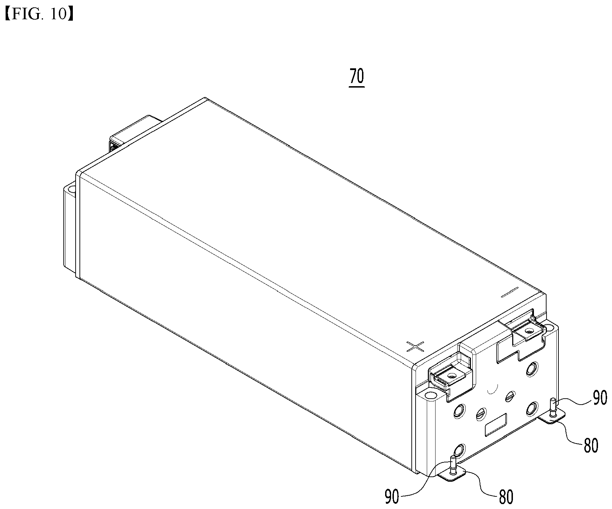

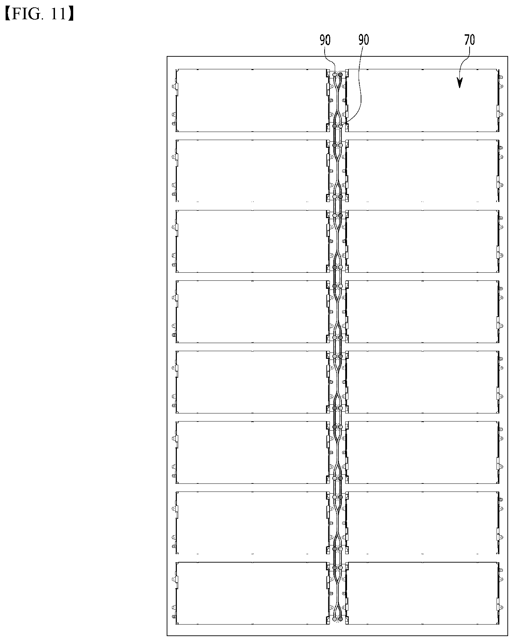

Hereinafter, the structure of a battery pack according to a comparative example will be described with reference to FIGS. 10 and 11.

FIG. 10 is a perspective view showing a battery module according to a comparative example. FIG. 11 is a plan view showing a battery pack structure including the battery module of FIG. 10.

Referring to FIGS. 10 and 11, the number of battery cells constituting the battery cell stack included in one battery module 70 corresponds to about 12 to 24, so that the width of the battery module 70 is relatively small as compared with the embodiments described above. In this comparative example, as shown in FIG. 10, a module frame protrusion portion 80 is formed on one side of the battery module 70, and a cooling port 90 is formed on the module frame protrusion portion 80.

Referring to FIG. 11, a plurality of battery modules described in FIG. 10 are disposed in the battery pack, and pack refrigerant tubes connected to the cooling port 90 are disposed between the battery modules 70 adjacent to each other. The pack refrigerant tubes are connected to the cooling ports 90 formed in each battery module, and a connection point between them may be a portion where refrigerant leakage is possible in the battery pack. In this way, when the number of battery modules disposed in one battery pack is relatively increased, the risk of refrigerant leakage may increase. In contrast, in the case of the battery pack according to the present embodiment described above, since it includes a large-area battery module, the number of battery modules in one battery pack may be reduced. Therefore, it is possible to minimize the number of cooling ports in each battery pack while having an integrated type cooling structure, whereby refrigerant leakage points are reduced and thus, the cooling efficiency in the battery pack unit can be improved.

The above-mentioned battery module or the battery pack including the same can be applied to various devices. Such devices can be applied to transportation means such as an electric bike, an electric vehicle, and a hybrid electric vehicle, and may be applied to various devices capable of using a battery module and a battery pack including the same, without being limited thereto.

Preferred embodiments of the present disclosure have been described above, but the scope of the present disclosure is not limited thereto and various modifications and improvements made by those skilled in the part by using the basic concept of the present disclosure, which are defined in the following claims, also belong to the scope of the present disclosure.

### [Description of Reference Numerals]

100: battery module
211: module frame protrusion portion
300: heat sink
500: cooling port
600: pack refrigerant tube
700: pack cooling housing

## Claims

1. A battery module comprising:
a battery cell stack in which a plurality of battery cells are stacked,
a module frame for housing the battery cell stack,
a heat sink formed on a bottom portion of the module frame, and
a cooling port for supplying a refrigerant to the heat sink,
wherein the module frame comprises a module frame protrusion portion formed by partially protruding from the bottom portion of the module frame,
wherein the module frame protrusion portion comprises a first module frame protrusion portion and a second module frame protrusion portion that are located to be spaced apart from each other on one side of the module frame, and
wherein the cooling port comprises a refrigerant injection port and a refrigerant discharge port, and each of the refrigerant injection port and the refrigerant discharge port is disposed on the first module frame protrusion portion and the second module frame protrusion portion.

2. The battery module according to claim 1,
wherein the bottom portion of the module frame comes into contact with the refrigerant.

3. The battery module according to claim 2,
wherein the heat sink comprises a heat sink protrusion portion that protrudes from one side of the heat sink to a portion where the module frame protrusion portion is located.

4. The battery module according to claim 3,
wherein an inlet and an outlet corresponding to each of the refrigerant injection port and the refrigerant discharge port are formed on the heat sink protrusion portion.

5. The battery module according to claim 4,
wherein the refrigerant injection port and the refrigerant discharge port have a shape protruding upward from an upper surface of the module frame protrusion portion.

6. The battery module according to claim 1,
which further comprises end plates for covering front and rear surfaces of the battery cell stack, wherein the module frame protrusion portion is extended and formed so as to pass through the end plate.

7. The battery module according to claim 1,
wherein a protruding pattern protruding toward the bottom portion of the module frame is formed inside the heat sink.

8. A battery pack comprising:
a battery module which comprises a battery cell stack in which a plurality of battery cells are stacked, a module frame for housing the battery cell stack, a heat sink formed on a bottom portion of the module frame, and a cooling port for supplying a refrigerant to the heat sink and discharging the refrigerant from the heat sink, respectively; and
a pack refrigerant tube having a pack refrigerant supply tube and a pack refrigerant discharge tube respectively connected to a refrigerant injection port and a refrigerant discharge port that are included in the cooling port and spaced apart from each other,
wherein the pack refrigerant tube is disposed between battery modules adjacent to each other.

9. The battery pack according to claim 8,
wherein all of the cooling ports formed in each of the battery modules adjacent to each other are disposed in a space between the battery modules adjacent to each other in which the pack refrigerant tube is disposed.

10. The battery pack according to claim 9,
wherein the cooling port comprises a refrigerant injection port and a refrigerant discharge port, and
a refrigerant injection port formed in one of the battery modules adjacent to each other, and a refrigerant discharge port formed in another battery module face each other.

11. The battery pack according to claim 10,
wherein the plurality of battery modules are disposed in two rows in a direction in which the battery cells are stacked, and comprise a first battery module and a second battery module that face each other in a direction perpendicular to a direction in which the battery cells are stacked, and
the refrigerant injection port and the refrigerant discharge port are disposed between the first battery module and the second battery module.

12. The battery pack according to claim 8,
wherein the battery module further comprises end plates that cover front and rear surfaces of the battery cell stack and are coupled to the module frame, and
the module frame protrusion portion is extended and formed so as to pass through the end plate, and the module frame protrusion portion is located in a space between the battery modules adjacent to each other in which the pack refrigerant tube is disposed.

13. The battery pack according to claim 8,
wherein the pack refrigerant supply tube and the pack refrigerant discharge tube are extended while intersecting with each other.

14. The battery pack according to claim 13,
wherein a height of the pack refrigerant supply tube and a height of the pack refrigerant discharge tube are different from each other.

15. The battery pack according to claim 8,
which further comprises a pack refrigerant tube housing that houses the pack refrigerant tube.
